(19)

Europäisches
Patentamt
European
Patent Office
Office européen
des brevets

(11) **EP 4 354 397 A1**

(12) **EUROPEAN PATENT APPLICATION**

(43) Date of publication:
**17.04.2024 Bulletin 2024/16**

(21) Application number: **22200742.9**

(22) Date of filing: **11.10.2022**

(51) International Patent Classification (IPC):
**G06T 7/73** (2017.01)   **H04N 23/698** (2023.01)

(52) Cooperative Patent Classification (CPC):
**G06V 20/56; G06T 5/80; G06T 7/73; G06V 10/147; G06V 10/454**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Continental Autonomous Mobility Germany GmbH**
**85057 Ingolstadt (DE)**

(72) Inventors:
• **DAVID, Ivan**
  **90411 Nürnberg (DE)**
• **GELLERT SANDOR, Mattyus**
  **90411 Nürnberg (DE)**

(74) Representative: **Continental Corporation**
**c/o Continental Automotive GmbH**
**Intellectual Property**
**Nordostpark 30**
**90411 Nürnberg (DE)**

(54) **METHOD FOR A CAMERA-BASED POSE ESTIMATION, DATA PROCESSING DEVICE, COMPUTER PROGRAM AND COMPUTER-READABLE MEDIUM**

(57)    The invention is concerned with a method, in particular a computer-implemented method, for a camera based pose estimation, comprising the steps of:

- obtaining (102) a set of point-correspondences of object points ($p_n$) in an object frame and corresponding image points ($p_n{}^c$),

- choosing a camera model for the camera which describes a transformation between 3D points in a camera frame and corresponding image points,

- calculating (103) unit vectors ($v_n$) for each point-correspondence which point from a camera center towards each object point ($p_n$) in the camera frame based on the camera model,

- expressing (103) the object points ($p_n$) by four selectable control points ($c_j$),

- expressing (104) the control points ($c_j$) in the camera frame based on the unit vectors ($v_n$), and

- estimating (105) the pose based on the control points ($c_j$) in the object frame and in the camera frame.

The present invention is further concerned with a data processing device comprising means for carrying out the method, a computer program causing a computer to carry out the method and a computer-readable medium having stored thereon the computer program.

Fig. 3

## Description

The present invention is concerned with a method, in particular a computer-implemented method, for a camera based pose estimation, a data processing device comprising means for carrying out the method, a computer program for carrying out the method, and to a computer-readable medium having stored the computer program thereon.

Pose estimation is widely applied e. g. in computer vision, robotics and augmented reality applications. It is related to the specific task of identifying an object in an image and to determine its position and/or orientation relative to a coordinate system, in particular a world coordinate system. The term pose refers to the position and/or, in particular exterior, orientation of an object, and may be described by means of a rotation and translation transformation, e. g. presented by a rotation matrix.

The underlying pose estimation problem was solved by means of various approaches. For instance, the Perspective-n-Point (PnP) problem aims to estimate the pose of a camera given its intrinsic parameters and a set of n correspondences between 3D object points and their corresponding 2D image projections. There are different solutions for the PnP problem. On the one hand, various iterative methods were suggested.

One at least partly iterative method is the maximum likelihood PnP (MLPnP) method as suggested by S. Urban et al., in "MLPnP - A Real-Time Maximum Likelihood Solution to the Perspective-n-Point Problem" published in ISPRS Ann. Photogramm. Remote Sens. Spatial Inf. Sci., III-3, 131-138, 2016 (https://doi.org/10.5194/isprs-annals-III-3-131-2016). This method considers a general camera model and subsequently applies an iterative refinement.

A problem frequently associated with iterative methods is that computational costs significantly increase with the number of points. Moreover, such methods are usually slow when implemented into an embedded system.

On the other hand, several non-iterative methods have become known. The efficient PnP (EPnP) method, as described by V. Lepetit et al., in "EPnP: An accurate O(n) solution to the PnP problem", published in the International Journal of Computer Vision 81(2), 2009 (DOI:10.1007/s11263-008-0152-6) is based on the idea of expressing n 3D points as a weighted sum of four virtual control points. It has the advantage that the computational cost grows linearly with the number of points. A similar method that processes an uncertainty of the keyppoints is the PnP-and-Lines (PnPL) method, as described in "Uncertainty-Aware Camera Pose Estimation from Points and Lines" by A. Vakhitov et al., published in IEEE/CVF Conference on Computer Vision and Pattern Recognition (CVPR), 2021 (DOI: 10.1109/CVPR46437.2021.00463).

Non-iterative methods, e. g. the EPnP and PnPL method, are typically superior in terms of computational effort needed, and results can be provided fast. However, a drawback of many of these non-iterative methods is given by the fact that they are limited to the pinhole camera model, one of the most common camera models. Accordingly, these methods are not directly applicable to cases in which cameras necessitating different camera models are used, e. g. cameras with cylindrical lenses or fisheye lenses.

The easiest approach to apply such a non-iterative method for solving the PnP problem to camera models different from the pinhole camera model is a conversion of the camera model to be used into the pinhole camera model before solving the underlying PnP problem. However, such transformations are typically inaccurate, especially comprise low numerical precision, and related functions describing the transformation may show partially asymptotic behavior and thus may at least in part be unsteady.

Thus, the objective problem underlying the present invention is to provide an efficient and simple method for solving the PnP problem for universal camera models.

This object is achieved by the features of the method according to claim 1, the data processing device according to claim 12, the computer program according to claim 13, and the computer-readable medium according to claim 14. Preferred embodiments are subject of the dependent claims.

Regarding the method the objective problem underlying the present invention is solved by a method, in particular a computer-implemented method, for a camara based pose estimation, wherein the method comprises the steps of:

- obtaining a set of point-correspondences of object points in an object frame and corresponding image points,
- choosing a camera model for the camera which describes a transformation between, especially 3D, points in a camera frame and corresponding image points,
- calculating unit vectors for each point-correspondence which point from a camera center towards each object point in the camera frame based on the camera model,
- expressing the object points by four selectable control points in the object frame,
- expressing the control points in the camera frame based on the unit vectors, and
- estimating the pose based on the control points in the object frame and in the camera frame.

The method according to the present invention starts from a set of, preferably at least four, point correspondences of 3D object points in the camera frame and corresponding 2D image points of the camera, whereas the camera's intrinsic parameters are at least partially known. It is of advantage, if the pose is estimated based on an orientational difference between the unit vectors and the object points expressed by the control points transformed into the camera frame.

The method applies a main idea behind the ePNP method outlined in the introduction, which is expressing the object points by four selectable, virtual control points. However, by calculating unit vectors for each point-correspondence which point from a camera center towards each object point as suggested by the present invention, the PnP problem can be solved in a highly efficient manner for any camera model. In particular, the present invention combines a high numerical stability without any asymptotic behavior with a comparably low computational effort. The suggested method thus allows a direct and fast pose estimation.

The method preferably can be applied in various fields including but not limited to computer vision, robotics, augmented reality applications, but also in advanced driver-assistance systems (ADAS), e. g. for tracking of objects in the vicinity of a vehicle.

In one embodiment, the estimated pose is a pose of the camera, especially relative to a world or reference coordinate system, or a pose of at least one object in the field of view of the camera with respect to the camera. It is thus possible to derive the pose of the camera itself relative to its surrounding and/or a pose of any object imaged by the camera. This opens a wide variety of applications, especially when relating to ADAS.

In another embodiment, expressing the control points in the camera frame includes setting up a linear equation system based on the unit vectors. For setting up the linear equation system preferably a cross-product of the image points and the unit vectors is calculated, from which the orientation difference between the unit vectors and the control points in the camera frame can be deduced.

It is of advantage, if the efficient Perspective-n-Point method (ePnP) is at least partially applied, in particular with respect to the four selectable control points. The four selectable control points can thus be chosen in accordance with the ePnP method and the method may also be applied for solving the linear equation system.

It is of advantage, if a Gauss-Newton algorithm is applied before estimating the pose. That way, the accuracy of the estimated pose can be enhanced.

In a preferred embodiment, the camera model a non-perspective camera model. The camera used then preferably comprises a cylindrical lens or a fisheye lens. Cameras with cylindrical or fisheye lenses advantageously comprise a comparably large field of view, providing superior visual odometry and localization.

However, the method is also applicable for the case of perspective camera models.

In one embodiment, the method further comprises the steps of:

- Recording at least one image including at least one object with the camera, and

- Extracting the set of point-correspondences from the image, which include at least four object points and corresponding image points.

This embodiment is of advantage when the pose of an object relative to the camera is to be estimated. In this case, the pose may be estimated based on the obtained point-correspondences and based on the method according to the present invention. The set of point-correspondences extracted may refer to the object and e. g. include information about the location and/or dimension of the object.

In this regard, it is of advantage, if extracting the set of point-correspondences includes providing the recorded image as an input to a trained neural network configured to output the set of point-correspondences of object points and corresponding image points based on the input. Besides the image, further information may also be provided as input for the neural network, e. g. parameters relating to the location of the camera. If the camera is mounted on a vehicle or on a robot, further parameters may be the dimension of the vehicle or robot. Using a trained neural network for extracting the set of point-correspondences of the objects of interest is an especially effective and can be carried out fast.

In another preferred embodiment, the estimated pose, especially the pose of the camera and/or the pose of the object, is provided to an advanced driver assistance system. The method is preferably applicable for any ADAS related function, e. g. involving tracking, in particular short-term tracking, of an object in the vicinity of a vehicle.

It is of advantage, if the estimated pose is used to carry out at least one parking related ADAS function, e. g. automatically parking a vehicle, in particular in a garage, in a parallel, perpendicular, or angled parking operation, for parking of the vehicle without markers, or for a memory parking function. In a typical memory parking function reference points relevant to define the parking area are frequently stored, e. g. relating to a garage and reused when a parking action is to be carried out. For parking the car, the pose of the camera with respect to the fixed parking area, e. g. the garage may be estimated.

A pose estimation according to the present invention offers the opportunity to combine cameras with non-perspective camera lenses with a fast and efficient pose estimation. Corresponding cameras offer the advantage of a comparably large field of view, being decisive for applications with limited space, such as parking operations.

It is further of advantage, if the estimated pose is a pose of the at least one object in the field of view of the camera, wherein the pose is used to detect the movement of an object, to carry out at least one parking related ADAS function, e. g. automatically parking a vehicle, or at least one driving related ADAS function, in particular for detecting the movement of objects in a vicinity of the field of view of the camera or for carrying out a collision prevention function. The object can be fixed at a certain location, or can be a moving object, e. g. a vehicle or pedestrian.

When used for a function relating to automatically parking a vehicle, the estimated pose is preferably used to determine a 3D location of the vehicle, especially relative to its surrounding, e. g. a garage or the like. A movement of objects in a vicinity of the field of view of the camera might additionally be detected during the parking operation. However, detecting moving objects and their poses is also of interest for implementing driving related ADAS functions, e. g. during a movement of a vehicle in a traffic scenery.

The objective problem underlying the present invention is also solved by means of a data processing device comprising means for carrying out the method according to any of the embodiments described. The objective problem is further solved by a computer program comprising instructions which, when the program is executed by a computer, cause the computer to carry out the method according to any of the embodiments described, and by a computer-readable medium having stored thereon the computer program according to the present invention.

Preferably, the computer program is executable on one or more central processing units (CPU), graphics processing units (GPU) or also in any embedded system, in particular a system on a chip (SOC).

The invention will be further explained based on the figures provided in the following:

Fig. 1 illustrates a conversion from a cylindrical camera model to the pinhole camera model according to the state of the art,

Fig. 2 illustrates the calculation of unit vectors according to the present invention.

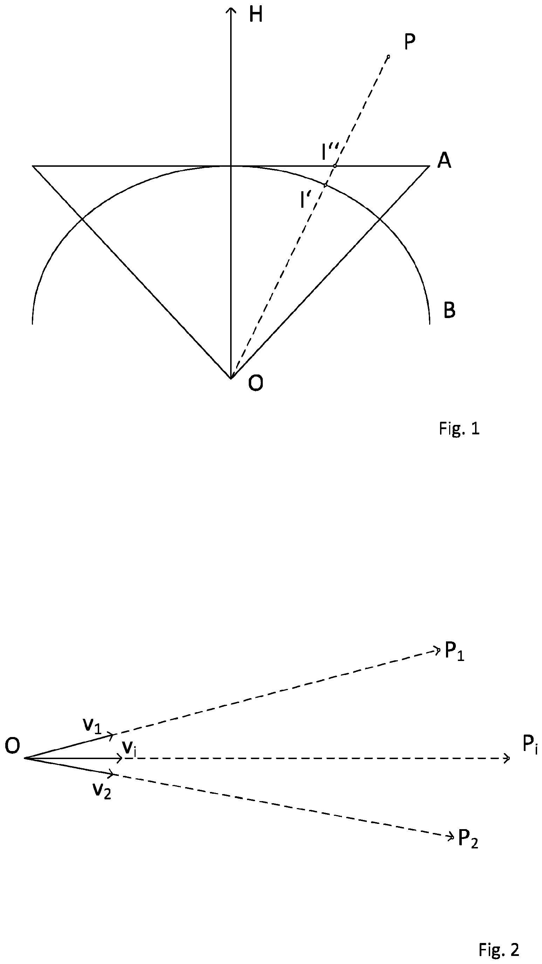

In Fig. 1 the conversion from any camera model to the pinhole camera model is illustrated. B is an image plane of a camera comprising a cylindrical camera lens, O is the camera center and H is the principle axis. On the other hand, A denotes an image plane using a perspective camera model converted from B. An object point P corresponds to image point I' of the camera image plane B and to the image point I" of image plane A. A problem of such conversion is that with increasing distance of the object point P from central axis H, a distance between the image points I' and I" also increases and thus leads towards an increased distortion and thus a certain inaccuracy relating to the conversion.

If an angle between the principle axis H and an axis pointing from the camera center O towards object point P approaches 90°, the distortion significantly increases while for an angle of 90° image point I' of image plane B would be converted to infinity resulting in an asymptotic behavior and partially unsteady transformation function.

The present invention provides a method for a camera based pose estimation that circumvents any problems arising with a manual conversion into a perspective camera model and still enables to utilize any camera model for pose estimation.

The method according to the present invention starts from a set of point-correspondences between n object points $p_n$ and corresponding image points $p_n^c$ of the camera whose locations in a camera coordinate system are unknown, and from a camera model M chosen for the specific camera in use, e. g. a non-perspective camera model.

As a first step, unit vectors $v_i$ are calculated which point from the camera center O towards the object points $p_n$, as illustrated in Fig. 2. The object points $p_n$ are e.g. provided in a world coordinate system, while the image points $p_n^c$ of the camera are typically available in the camera frame or camera coordinate system.

The location of each image point $p_i^c$ can be expressed as

$$p_i^c = Rp_i + t$$

whereas R is a rotation matrix and t a translation vector. In order to derive R and t, similar as in case of the ePnP method, four virtual control points $c_j$ with j=1-4 are selected, and the object points $p_n$ are expressed by the control points $c_j$, here exemplarily by using barycentric coordinates, and the control points $c_j$ are also expressed in the camera frame:

$$p_i = \sum_{j=1}^{4} \alpha_{i,j} c_j \; ; and \; p_i^c = \sum_{j=1}^{4} \alpha_{ij} c_j^c$$

whereas $\sum_{j=1}^{4} \alpha_{ij} = 1$, i=1,...n and $c_j^c$ are control points in the coordinate system of the camera.

Subsequently, the pose is estimated based on the control points in the object frame and in the camera frame. The estimated pose can be the pose of the camera relative to e.g. a world coordinate system, or the pose of at least one object in the field of view of the camera with respect to the camera.

The image points $p_n^c$ can be expressed as multiples of the unit point vectors, i.e. $p_i^c = \lambda_i v_i$. Tak-

ing into account, that the cross product of $v_i$ and $p_n^c$ has zero magnitude, if both point in the same direction, a linear equation system can be deduced in a straightforward manner. The linear equation system can then e. g. be solved based on the ePnP method. Before outputting the pose a Gauss-Newton algorithm might further be applied.

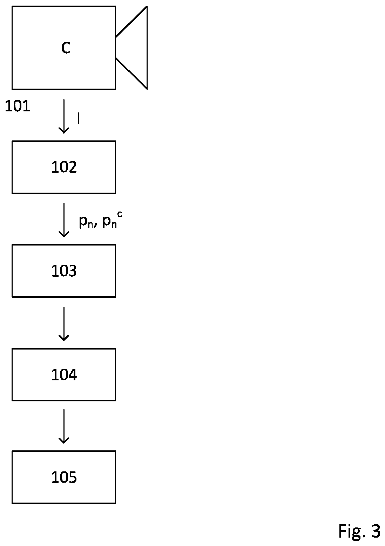

A preferred embodiment of the present invention is illustrated in Fig. 3. In the upper part of Fig. 3, a camera C is shown, with the help of which an image I, including at least one object, is recorded (step 101). In a second step 102, a set of point-correspondences is extracted from the image I, which include object points $p_n$ and corresponding image point $p_n^c$ of the object. The extraction of point-correspondences may be carried out by using a trained neural network.

The point correspondences are used to estimate the pose of the object, which comprises the calculation of the unit vectors $v_i$, and expressing the object points $p_n$ by the four control points $c_j$ in step 103. Subsequently, in step 104, the control points $c_j$ are also expressed in the camera frame based on the unit vectors $v_n$. Finally, in step 105, the pose of the object is estimated based on the control points $c_j$ in the object frame and in the camera frame. In particular, the pose may be estimated based on an orientation difference between the unit vectors $v_i$ and the object points expressed by the control points $c_j$ in the camera frame.

In other embodiments, the point correspondences may be derived in a different manner. Moreover, the present invention not only allows for an estimation of the pose of an object but also for a determination of the pose of the camera in relation to a reference coordinate system, e.g. the world coordinate system.

## Claims

1. A method, in particular a computer-implemented method, for a camara based pose estimation, comprising the steps of:

   - obtaining a set of point-correspondences of object points ($p_n$) in an object frame and corresponding image points $(p_n^c)$,
   - choosing a camera model (M) for the camera which describes a transformation between 3D points in a camera frame and corresponding image points,
   - calculating unit vectors ($v_n$) for each point-correspondence which point from a camera center (O) towards each object point ($p_n$) in the camera frame based on the camera model (M),
   - expressing the object points ($p_n$) by four selectable control points ($c_j$),

   - expressing the control points ($c_j$) in the camera frame based on the unit vectors ($v_n$), and
   - estimating the pose based on the control points ($c_j$) in the object frame and in the camera frame.

2. The method according to claim 1, wherein the estimated pose is a pose of the camera or a pose of at least one object in the field of view of the camera with respect to the camera.

3. The method according to claim 1 or 2, wherein expressing the control points ($c_j$) in the camera frame includes setting up a linear equation system based on the unit vectors ($v_n$).

4. The method according to any of the preceding claims, wherein an efficient Perspective-n-Point method (ePnP) is at least partially applied, in particular with respect to the four selectable control points.

5. The method according to one of the preceding claims, wherein a Gauss-Newton algorithm is applied before estimating the pose.

6. The method according to any of the preceding claims, wherein the camera model (M) is a non-perspective camera model.

7. The method according to any of the preceding claims, further comprising the steps of:

   - Recording at least one image including at least one object with the camera, and
   - Extracting the set of point-correspondences from the image, which include at least four object points ($p_n$) and corresponding image points $(p_n^c)$

8. The method according to claim 7, wherein extracting the set of point-correspondences includes:
   Providing the recorded image as an input to a trained neural network configured to output the set of point-correspondences of object points ($p_n$) and corresponding image points $(p_n^c)$ based on the input.

9. The method according to any of the preceding claims, wherein the estimated pose is provided to an advanced driver assistance system.

**10.** The method according to any of the preceding claims,
wherein the estimated pose is used to carry out at least one parking related ADAS function, e. g. automatically parking a vehicle, in particular in a garage, in a parallel, perpendicular, or angled parking operation, for parking of the vehicle without markers, or for a memory parking function.

**11.** The method according to any of the preceding claims,
wherein the estimated pose is the pose of the at least one object in the field of view of the camera, wherein the pose is used to detect the movement of an object, to carry out at least one parking related ADAS function, e. g. automatically parking a vehicle or at least one driving related ADAS function,
in particular for detecting the movement of objects in a vicinity of the field of view of the camera or for carrying out a collision prevention function.

**12.** A data processing device comprising means for carrying out the method of
any of the preceding claims.

**13.** A computer program comprising instructions which, when the program is
executed by a computer, cause the computer to carry out the method of any of the claims 1-11.

**14.** Computer-readable medium having stored thereon the computer program of claim 13.

H

P

A

I'''

I'

B

O

Fig. 1

P₁

v₁

O

vᵢ

Pᵢ

v₂

P₂

Fig. 2

C

101

$I$

102

$p_n, p_n^c$

103

104

105

Fig. 3

Europäisches
Patentamt

European
Patent Office

Office européen
des brevets

# EUROPEAN SEARCH REPORT

Application Number

EP 22 20 0742

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GONG XUANRUI ET AL: "Pose Estimation of Omnidirectional Camera with Improved EPnP Algorithm", SENSORS, vol. 21, no. 12, 4008, 10 June 2021 (2021-06-10), pages 1-13, XP093033526, ISSN: 1424-8220, DOI: 10.3390/s21124008 | 1-6, 12-14 | INV. G06T7/73 H04N23/698 |
| Y | * abstract * * section 1, Introduction * * section 2, Omnidirectional Camera Spherical Model * * section 3, Pose Estimation Algorithm * * equations 1, 6, 7, 11, 12 * * Algorithm 1 * * figures 1, 2 * ----- | 7-11 | |
| X | CN 113 763 479 A (UNIV CHANGCHUN SCIENCE & TECH) 7 December 2021 (2021-12-07) | 1,12-14 | |
| A | * abstract * * paragraph [0008] * * paragraph [0009] * ----- | 2-11 | TECHNICAL FIELDS SEARCHED (IPC) |
| Y | WO 2021/110497 A1 (VALEO SCHALTER & SENSOREN GMBH [DE]) 10 June 2021 (2021-06-10) * abstract * * page 1, line 14 - line 18 * * page 4, line 20 - line 34 * * page 5, line 16 - line 18 * * page 11, line 25 - line 26 * * figure 1 * ----- | 7-11 | G06T H04N |

The present search report has been drawn up for all claims

| Place of search | Date of completion of the search | Examiner |
|---|---|---|
| The Hague | 23 March 2023 | Bouffier, Alexandre |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 22 20 0742**

This annex lists the patent family members relating to the patent documents cited in the above-mentioned European search report.
The members are as contained in the European Patent Office EDP file on
The European Patent Office is in no way liable for these particulars which are merely given for the purpose of information.

**23-03-2023**

| Patent document cited in search report | | Publication date | Patent family member(s) | | Publication date |
|---|---|---|---|---|---|
| CN 113763479 | A | 07-12-2021 | NONE | | |
| WO 2021110497 | A1 | 10-06-2021 | DE 102019132996 | A1 | 10-06-2021 |
| | | | WO 2021110497 | A1 | 10-06-2021 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. URBAN et al.** MLPnP - A Real-Time Maximum Likelihood Solution to the Perspective-n-Point Problem. *ISPRS Ann. Photogramm. Remote Sens. Spatial Inf. Sci.,* 2016, vol. III (3), 131-138, https://doi.org/10.5194/isprs-annals-III-3-131-2016

- **V. LEPETIT et al.** EPnP: An accurate O(n) solution to the PnP problem. *International Journal of Computer Vision,* 2009, vol. 81 (2
- **A. VAKHITOV et al.** Uncertainty-Aware Camera Pose Estimation from Points and Lines. *IEEE/CVF Conference on Computer Vision and Pattern Recognition (CVPR),* 2021